(19) Europäisches Patentamt / European Patent Office / Office européen des brevets

(11) **EP 1 315 303 B1**

(12) **EUROPEAN PATENT SPECIFICATION**

(45) Date of publication and mention
of the grant of the patent:
**02.05.2007 Bulletin 2007/18**

(51) Int Cl.:
**H04B 1/10** (2006.01)

(21) Application number: **01127363.8**

(22) Date of filing: **21.11.2001**

(54) **AM receiver with adaptive channel filter bandwidth**

AM-Empfänger mit einem Kanalfilter mit adaptiver Bandbreite

Récepteur de modulation d'amplitude avec filtre de canal à largeur de bande adaptative

(84) Designated Contracting States:
**DE FR GB**

(43) Date of publication of application:
**28.05.2003 Bulletin 2003/22**

(73) Proprietor: **Sony Deutschland GmbH**
**50829 Köln (DE)**

(72) Inventors:
• **Nöthlings, Rolf,**
**Advanced Technology Center Stuttgart**
**70327 Stuttgart (DE)**

• **Wildhagen, Jens,**
**Advanced Technology Center Stuttgart**
**70327 Stuttgart (DE)**

(74) Representative: **Müller - Hoffmann & Partner**
**Patentanwälte,**
**Innere Wiener Strasse 17**
**81667 München (DE)**

(56) References cited:
**EP-A- 0 410 663          US-B1- 6 178 314**

## Description

The present invention relates to a channel selection filter bandwidth control, in particular to a method to control the bandwidth of a channel selection filter of a broadcast receiver and to a control circuit for the bandwidth of a channel selection filter of a broadcast receiver.

In particular amplitude modulation (AM) broadcasting often suffers from adjacent channel distortions interfering in the frequency range of the wanted channel. As the bandwidth of an AM-channel is very narrow these distortions should be filtered very carefully in order to keep as much information as possible.

Some existing state of the art receivers have a set of filters to suppress such adjacent channel distortions. However, as these filters are discrete realizations usually the optimal bandwidth for the actual reception situation is not provided. That means either the bandwidth is too big and therefore the adjacent channel is not suppressed sufficiently or the bandwidth is too small and information gets lost unnecessarily. Moreover, usually the filters are selected by the user, e. g. via a wide/narrow mode switch, which means that the filters are not adjusted to the actual/changing reception situation.

European Patent Applications 00 110 526.1 and 00 126 287.2 filed by the Applicant disclose tunable bandwidth filters in particular for AM-receivers with which the actual reception situation can be considered to just suppress a disturbing adjacent channel. Therefore unnecessary information loss can be prevented. However, in these both documents only realizations for tunable bandwidth filters are shown, but nothing is stated in respect to the actual determination of the bandwidth itself.

In US 6,178,314 B1 an adaptive control system for optimizing radio reception by controlling intermediate frequency bandwidth and baseband bandwidth to reduce both interferences and noise while remaining compatible with AM broadcasts is disclosed. An adaptive IF filter detects the presence of interfering undesired sources by evaluating the difference of a first level signal from a post-filter level detector and a second level signal from a pre-filter level detector. It is the difference between these two signals that is compared with a threshold to determine which bank of filter coefficients is loaded into a filter processor in order to obtain either a narrow or wide bandwidth of the filter. The quality of the adaptation in this adaptive control system is strongly dependent on the quality of the predetermined thresholds and on the reception levels of the signal.

Therefore, it is the object underlying the present invention to provide an appropriate control for a tunable bandwidth filter, e. g. an appropriate channel selection filter bandwidth control.

This object is solved according to the present invention by the method to control the bandwidth of a channel selection filter of a broadcast receiver according to independent claim 1 and a control circuit for the bandwidth of a channel selection filter of a broadcast receiver according to independent claim 7. Respective preferred embodiments thereof are respectively defined in the respective following subclaims. A computer program product according to the present invention is defined in claim 18.

The method to control the bandwidth of a channel selection filter of a broadcast receiver according to the present invention adjusts the bandwidth of the channel selection filter until both sidebands of a received and channel selection filtered broadcast signal have a predetermined level of similarity, the level of similarity indicating the similarity of the two sideband spectra.

Therewith, the bandwidth of the channel selection filter with tunable bandwidth can automatically be adapted to the actual/changing reception situations.

Preferably, the similarity of both sidebands is determined by a correlation function and/or by analyzing a distortion energy caused by an adjacent channel and a signal energy of the received broadcast signal.

Alternatively, the similarity of both sidebands might be determined by analyzing an output signal of a frequency demodulation of a double sideband, lowpass filtered AM broadcast signal.

In the case of determining the similarity of both sidebands by analyzing the distortion energy caused by an adjacent channel and the signal energy, of the received broadcast signal, further preferably, the distortion energy caused by an adjacent channel is determined as the energy difference of both sideband energies. A sideband energy might preferably be determined on basis of a short time integration of said sideband. The longer this integration is, the more reliable the system is in terms of noise floors.

Corresponding to the method according to the present invention, the control circuit for the bandwidth of the channel selection filter of a broadcast receiver according to the present invention comprises an adjustment unit to adjust the bandwidth of the channel selection filter until both sidebands of a received and channel selection filtered broadcast signal have a predetermined level of similarity, the level of similarity indicating the similarity of the sideband spectra.

Therewith, in similar structure as the method according to the present invention, the control circuit realizes a loop structure since the channel selection filtered broadcast signal itself is used to determine the bandwidth of the channel selection filter. This means not necessarily that it is only possible to integrate the system into the main signal flow of a digital receiver wherein the complex output signal is available at the output of the bandwidth filter, but it is also possible to run this circuit in parallel and feed the bandwidth also to a second tunable bandwidth filter in the main signal flow. In the latter case the further processing on the determined bandwidth, e. g. another lowpass or a min/max unit in order to make the determined bandwidth more stable, can be applied.

Said adjustment unit preferably comprises a distortion energy analyzer to determine the distortion energy caused by an adjacent channel of the received and channel selection filtered broadcast signal, and a setting unit to adjust the bandwidth of the channel selection filter on basis of the distortion energy and the signal energy of the received broadcast signal.

The distortion energy analyzer according to the present invention preferably comprises first and second short time integrators each of which is adapted to determine the energy of one sideband, and a first subtracter being adapted to determine the distortion energy as a difference of the energies of both sidebands. Further preferably, the distortion energy analyzer might comprise an absolute value determination unit arranged in the signal flow behind the first subtracter so that the output signal of the distortion energy analyzer, i. e. the distortion energy, always has a positive sign.

The setting unit according to the present invention preferably comprises means (3e, 3d, 3c) adapted to device a remaining signal energy as signal energy of the received broadcast signal lying outside the bandwidth of the channel selection filter or a filtered signal energy as signal energy of the received broadcast signal lying within the bandwidth of the channel selection filter, and a second subtracter adapted to build a further difference between the distortion energy and the remaining signal energy or the filtered signal energy, and an integrator adapted to output a control signal for setting the bandwidth of the channel selection filter as an integrated value of the further difference.

Further preferably, said integrator is preset to a maximum bandwidth of the channel selection filter. In this case the bandwidth is adjusted so that first maximum signal information, but also maximum distortions are used to adjust the bandwidth of the channel selection filter.

Said setting unit according to the present invention might preferably comprise a multiplier multiplying the signal energy of the received broadcast signal by the output signal of the integrator and feeding the resulting product to the second subtracter and further preferably a third subtracter subtracting the output signal of the integrator from the maximum bandwidth of the channel selection filter and supplying the resulting difference signal to the multiplier.

In other words, in the latter case said setting unit according to the present invention comprises a third subtracter subtracting the output signal of the integrator, which is the actual bandwidth, from the maximum bandwidth of the channel selection filter, and a multiplier multiplying the signal energy by the resulting difference signal of the third subtracter, which is the scaling bandwidth, and feeding it to the second subtracter.

Said setting unit according to the present invention might further comprise a third short time integrator to determine the signal energy of the received broadcast signal and/or a first weighting unit weighting the further difference between the distortion energy and the remaining signal energy or the filtered signal energy with a first constant to determine a time constant of the control circuit, and/or a second weighting unit weighting the remaining signal energy or the filtered signal energy with a second constant to determine a trade-off between this distortion energy and the remaining signal energy or the filtered signal energy, respectively.

Alternatively said adjustment unit might comprise a fm demodulation unit to determine the distortion level of a received and channel selection filtered broadcast signal, and a setting unit to adjust the bandwidth of the channel selection filter on basis of the distortion level. In other words, an analyzing unit might either comprise a distortion energy analyzer or a fm demodulation unit which outputs a control signal to the respective setting unit.

Additionally, a computer program product according to the present invention comprises computer program means adapted to perform the method steps as defined above and/or to embody the control circuit as defined above when executed on a computer, digital signal processor or the like.

The present invention is preferably applied to AM broadcast receivers. However, also other types of broadcast receivers might be provided with the tunable bandwidth control according to the present invention as long as comparable signal conditions are given. Therefore, the term channel selection filter of a broadcast receiver as used in this application also includes tunable bandwidth filters used for other purposes and in other receivers.

Further features, objects and advantages of the method and control circuit according to the present invention will be better understood from the following detailed description of an exemplary embodiment thereof taken in conjunction with the accompanying drawings, wherein

**Fig. 1**   shows the spectrum of one transmission channel with lower sideband and upper sideband, parts of the spectrum of an adjacent channel and the spectrum of a symmetric channel selection filter;

**Fig. 2**   shows the spectrum of one transmission channel with lower sideband and upper sideband, parts of the spectrum of an adjacent channel and the spectrum of an unsymmetric channel selection filter;

**Fig. 3**   shows a general block diagram of a preferred channel selection filter bandwidth control according to the present invention.

**Fig. 4**   elucidates different signals illustrating the channel selection filter bandwidth control according to the present invention, and

**Fig. 5**   shows a detailed block diagram of a preferred channel selection filter bandwidth control according to the present invention.

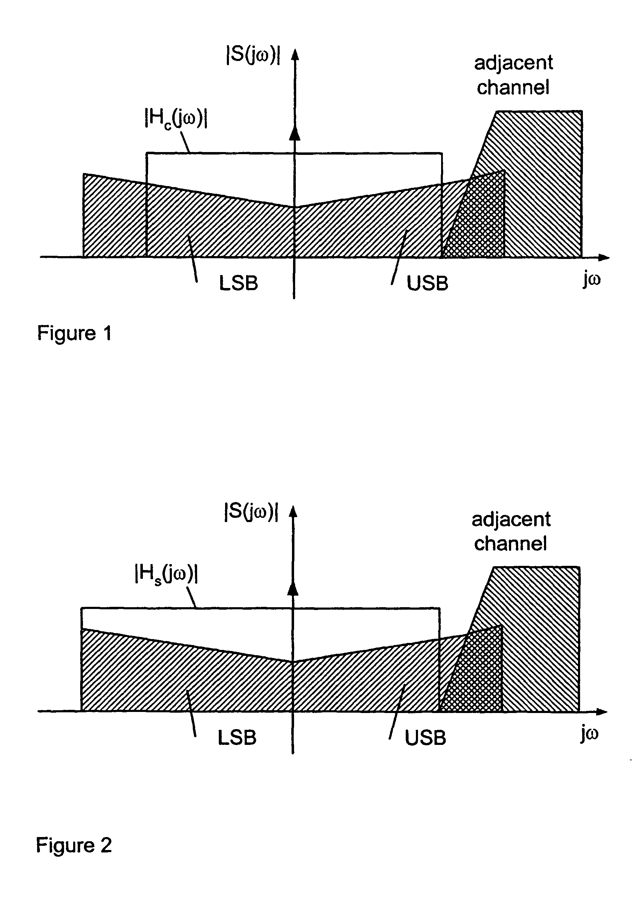

Fig. 1 shows the spectrum $S(j\omega)|$ of a broadcast

channel with its lower sideband LSB and its upper sideband USB, parts of the spectrum of an adjacent channel which overlaps the upper sideband USB and the spectrum $|H(j\omega)|$ of the channel selection filter with tuned bandwidth, i. e. with a bandwidth controlled so that the adjacent channel is not disturbing the currently selected channel. Since the adjacent channel shows only frequency components directly outside the passband of the channel selection filter, the filter is ideally tuned so that no distortions from the adjacent channel lie within its passband, but the maximum information without distortions passes through the filter.

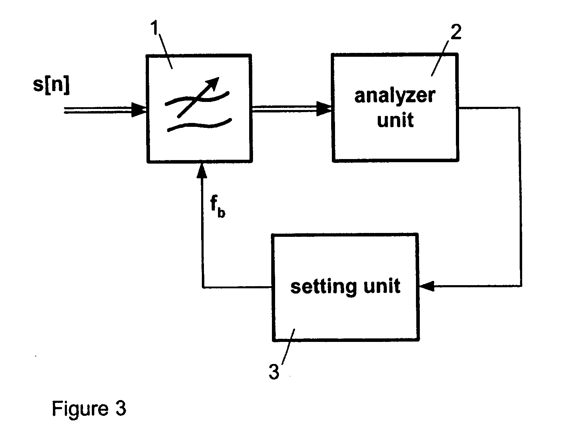

A general block diagram of a preferred embodiment of a channel selection filter bandwidth control according to the present invention is shown in Fig. 3.

After the incoming complex baseband signal is lowpass filtered with the tunable bandwidth filter 1 it fed to an analyzer unit 2 which compares both sidebands of the lowpass filtered complex baseband signal and which outputs a control signal to a setting unit 3. The adjustment or setting unit 3 outputs the bandwidth $f_b$ to the tunable bandwidth filter 1, i. e. a control signal indicating which bandwidth $f_b$ should be set as passband in the tunable bandwidth filter 1.

Based on the comparison of both sidebands of the double sideband signal the bandwidth $f_b$ of the tunable bandwidth channel selection filter is reduced from the maximum bandwidth until both filtered sidebands reach a certain level of similarity. Alternatively, the bandwidth $f_b$ of the tunable bandwidth channel selection filter might also be increased from zero or a small bandwidth until both filtered sidebands reach a certain level of similarity.

Generally, the measure of similarity of two signals can be obtained by a correlation function, here the correlation function:

$$R_{USB, LSB}(\tau) = E \{USB(t+\tau) \cdot LSB(t)\}.$$

Assuming that the sampled upper sideband USB which contains an information signal s[n] is disturbed by a sampled neighbour channel n[n] and there is no additive noise present,

$$USB[n] = s[n] + n[n]$$

$$LSB[n] = s[n],$$

it follows that the above correlation function can be determined to:

$$R_{USB, LSB}[0] = (1 + E_n/E_s)^{-0.5}.$$

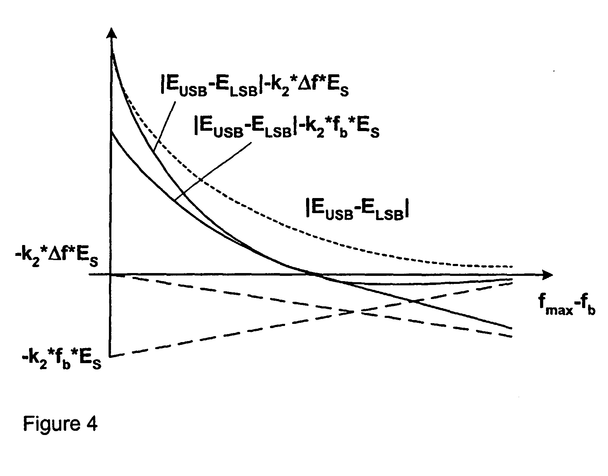

This means that in this case the similarity can be determined analyzing the distortion energy $E_n$ caused by the adjacent channel and the signal energy $E_s$ itself. The distortion energy $E_n$ can be calculated as the energy difference of both sideband energies, i. e. the energy of the upper sideband $E_{USB}$ and the energy of the lower sideband $E_{LSB}$, i. e. $E_n = |E_{USB}-E_{LSB}|$, as it is shown by the dotted line in Fig. 4. As the AM-channel is a flat fading channel, this measure is almost independent of the noise floor if the integrator length of the integrators determining the signal energy $E_s$ and the distortion energy $E_n$ is sufficient.

In case of non-coherent signals (carrier offset) the AM-carrier needs to be suppressed in both sidebands.

A realization of the channel selection filter bandwidth control could then be that the tunable filter bandwidth $f_b$ is reduced until $|E_{USB}-E_{LSB}|$ crosses a certain threshold, ideally until $|E_{USB}-E_{LSB}| = 0$ in which case the correlation function would have a value $R_{USB,LSB}= 1$, i. e. until there is no distortion energy $E_n$ present. But as the filters are not ideal and the noise floor cannot be fully neglected, it makes sense to apply a trade-off between the distortion energy $E_n$ and the signal energy $E_s$. Further, if the signal is much stronger than the adjacent channel, i.e. the signal energy $E_s$ is much bigger than the distortion energy $E_n$, a big part of the distortion is already masked and does not need to be suppressed, i. e. $E_s>>E_n$ in which case the correlation function should have a value $R\sim1$.

Generally, two possibilities might be considered: First, the remaining distortion channel energy could be compared to the filtered signal energy and a threshold could be set determining how much signal loss is worth it to filter further distortions. Alternatively, the remaining distortion energy could be compared to the remaining signal energy and a threshold might determine how much remaining distortion can be accepted at a certain signal level.

Both comparison values can be estimated using the tunable filter bandwidth $f_b$. The filtered signal energy is estimated by $\Delta f/f_{max} \cdot E_s$, with $\Delta f = f_{max} - f_b$, and the remaining signal energy, which is filtered out, by $f_b/f_{max} \cdot E_s$, as it is indicated by dashed lines in Fig. 4. The operating point would then be the zero's crossing of the respective differences to the distortion energy $E_n = |E_{USB}-E_{LSB}|$, as it is shown by solid lines in Fig. 4. Taking the bandwidth $f_b$ directly into account implies that in case the energies are not changing anymore (because the distortion is already filtered) the filter is operated at the highest possible bandwidth.

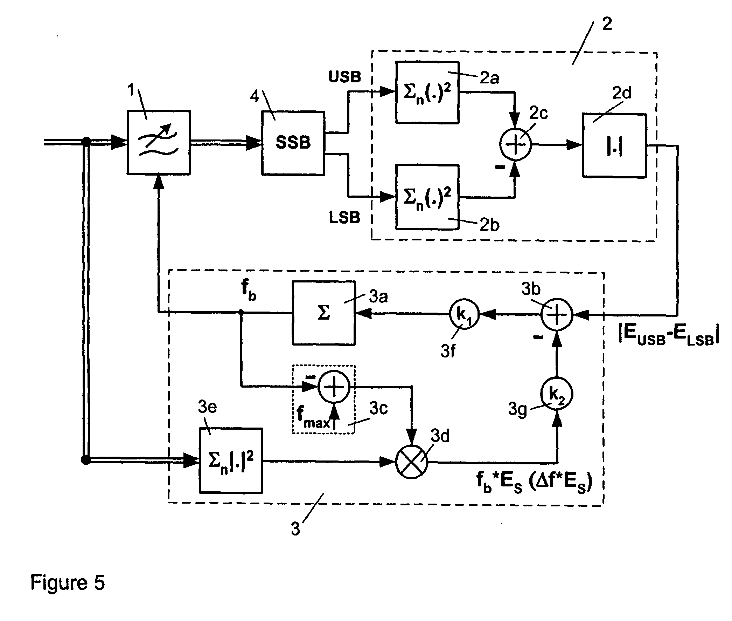

A detailed block diagram of a preferred embodiment of a channel selection filter bandwidth control according to the present invention is shown in Fig. 5.

After the incoming complex baseband signal is lowpass filtered with the tunable bandwidth filter 1 it is split into its two sidebands by a single sideband demodulator 4. Both sidebands, i. e. the upper sideband USB and the lower sideband LSB, are fed to the analyzer unit 2, in this case a distortion energy analyzer 2, which determines the distortion energy $E_n = |E_{USB}-E_{LSB}|$. The distortion energy $E_n$ is input to the setting unit 3 which additionally receives the incoming complex baseband signal and outputs the bandwidth $f_b$ to the tunable bandwidth filter 1, i. e. a control signal indicating which bandwidth $f_b$ should be set as passband in the tunable bandwidth filter 1.

The distortion energy analyzer 2 comprises a first short time integrator 2a receiving the upper sideband signal USB and determining the energy $E_{USB}$ thereof, a second short time integrator 2b receiving the lower sideband signal LSB and determining the energy $E_{LSB}$ thereof, a first subtracter 2c receiving the energy of the upper sideband $E_{USB}$ as minuend and the energy of the lower sideband $E_{LSB}$ as subtrahend, and an absolute value determination unit 2d receiving the difference signal of the first subtracter 2c and outputting the distortion energy $E_n = |E_{USB}-E_{LSB}|$. As is apparent to the skilled person, of course the energy of the lower sideband $E_{LSB}$ might also be supplied as minuend and the energy of the upper sideband $E_{USB}$ might also be supplied as subtrahend to the first subtracter 2c. Due to the absolute value determination unit 2d the distortion energy value $E_n$ output by the distortion energy analyzer 2 is always positive.

The longer the integration of the short time integrators 2a, 2b, is, the more reliable the system is in terms of noise floors.

The setting unit 3 comprises an integrator 3a which outputs the bandwidth $f_b$ (i. e. the control signal to set the bandwidth $f_b$) to adjust the bandwidth filter and which sums the distortion energy $E_n$ compared with a reference signal derived from signal energy $E_s$. Therefore, the input signal for the integrator 3a is based on a difference signal of the distortion energy $E_n$ and the signal energy $E_s$ produced by a second adder 3b which receives the distortion energy $E_n$ (or a signal derived therefrom) as minuend and the signal energy $E_s$ (or a signal derived therefrom) as subtrahend. As mentioned above, the integrator 3a is preset to the maximum bandwidth $f_{max}$ of the bandwidth controllable channel selection filter 1.

For the first of the above possibilities, i.e. for comparing the remaining distortion channel energy to the filtered signal energy, the reference signal which is derived from signal energy $E_s$ might be calculated by way of a multiplication of the signal energy $E_s$ with $\Delta f=f_{max}-f_b$ (or control signals corresponding thereto). The multiplication is performed by way of a multiplier 3d receiving the signal energy $E_s$ as first multiplicant and $\Delta f=f_{max}-f_b$ as second multiplicant. The second multiplicant of the multiplier 3d is calculated by a third subtracter 3c receiving $f_{max}$ as minuend and the output signal of the integrator 3a, i. e. $f_b$, as subtrahend. The product signal $\Delta f*E_s$ generated by the multiplier 3d (indicated in brackets in fig. 4, i.e. ($\Delta f*E_s$)) forms the basis for the subtrahend input to the second subtracter 3b.

Alternatively, for the second of the above possibilities, i.e. for comparing the remaining distortion energy to the remaining signal energy, the reference signal might be calculated by way of a multiplication of the signal energy $E_s$ with $f_b$ (or control signals corresponding thereto). In this case the third subtracter 3c is not included in the circuit and the multiplier 3d receives the signal energy $E_s$ as first multiplicant and $f_b$ as second multiplicant. Again, the product signal generated by the multiplier 3d (indicated without brackets in fig. 4, i.e. $f_b*E_s$) forms the basis for the subtrahend input to the second subtracter 3b.

The signal energy $E_s$ is determined by a short time integrator 3e within the setting unit 3 which receives the incoming complex baseband signal which is not lowpass filtered by the tunable bandwidth channel selection filter 1.

The time constant of the control circuit is determined by a first constant $k_1$ ($k_1<0$) which weights the difference signal output by the second subtracter 3b before it is input to the integrator 3a. The weighting is performed by a first weighting unit 3f. A second weighting unit 3g weights the product signal output by the multiplier 3d with a second constant $k_2$ before it is input as minuend to the second subtracter 3b. The constant $k_2$ influences the trade-off between distortion and signal. The smaller the constant $k_2$ is, the smaller the accepted distortion and the resulting bandwidth is. Moreover, the constant $k_2$ has an influence on the time constant for opening the filter again as it is determining the slope of the criteria beyond the optimum bandwidth. This decay time constant should be smaller than the attack time constant as the filter should not open every time the adjacent channel has a short period of silence. To enhance the resistance in case of big additive noise, it is possible to measure this noise analyzing the energy differences of both sidebands after a bandpass was operated on them. This bandpass should reject the carrier and the adjacent channel. This measure could also be considered in the second constant $k_2$. Of course, this weighting could alternatively be performed on the distortion energy $E_n$.

Here, the time constant of the system depends on the distortion energy. To make it independent thereof, a signum unit can be applied after the energy comparison to add/subtract a constant value in the integrator.

An alternative to determine the similarity by analyzing the distortion energy $E_n$ caused by the adjacent channel and the signal energy $E_s$ itself is to derive the similarity from a frequency demodulation of the double sideband, lowpass filtered AM signal. The sidebands are almost similar when the level of the frequency demodulated signal is (almost) zero.

An advantage is that this measure is more independent from an unbalanced transfer function of the analogue IF filter which is usually arranged in the frontend of a receiver. A disadvantage is that it is more sensitive to noise.

Both methods to check the similarity, using energy analysis of frequency demodulation, need a coherent input signal in order to avoid an influence on the AM carrier. In the energy analysis a carrier frequency offset would lead to an inforcement of one sideband energy and in the frequency demodulation analysis a carrier offset would cause a big frequency component. In case the input signal is not frequency coherent, the carrier must be filtered.

If this system is integrated into the main signal flow of a digital receiver the complex output signal is available at the output of the bandwidth filter. However, it is also possible to run this circuit in parallel and feed the bandwidth $f_b$ to a second tunable bandwidth filter in the main signal flow. Then, further processing on the bandwidth $f_b$, e. g. another lowpass or a min/max unit in order to make the bandwidth $f_b$ more stable, can be applied.

A further advantage of an external tuned bandwidth filter in the main signal flow, besides the further processing on the bandwidth $f_b$, is that an "unsymmetric" filter can be used, as it is indicated by the filter transfer function shown in fig. 2. This filter can be adapted so that only the distortion is filtered.

This needs the decision of which sideband is the distorted one which can be made from comparing the single sideband energies before determining the energy difference. Of course, this can be extended by a compensation part compensating the information loss taking advantage of the redundancy of both sidebands. However, the filter inside the control circuit still should be symmetric.

**Claims**

1. Method to control the bandwidth of a channel selection filter (1) of a broadcast receiver, comprising receiving and channel selection filtering a broadcast signal to obtain a received and channel selection filtered broadcast signal with two sidebands, each sideband comprising a respective sideband spectrum
**characterized by**
adjusting the bandwidth of the channel selection filter (1) until both sidebands have a predetermined level of similarity, the level of similarity indicating the similarity of the two sideband spectra.

2. Method according to claim 1, **characterized by** determining the similarity of both sidebands by a correlation function.

3. Method according to claim 1 or 2, **characterized by** determining the similarity of both sidebands by analyzing a distortion energy caused by an adjacent channel and a signal energy of the received broadcast signal.

4. Method according to claim 1, **characterized by** receiving a double sideband, lowpass filtered AM broadcast signal as the received and channel selection filtered broadcast signal, and determining the similarity of both sidebands by analyzing an output signal of a frequency demodulation of the double sideband, lowpass filtered AM broadcast signal.

5. Method according to claim 3, **characterized in that** the distortion energy caused by an adjacent channel is determined as the energy difference of both sideband energies.

6. Method according to claim 5, **characterized in that** a sideband energy is determined on basis of a short time integration of said sideband.

7. Control circuit for the bandwidth of a channel selection filter (1) of a broadcast receiver, which receiver is adapted to receive and channel selection filter a broadcast signal to obtain a received and channel selection filtered broadcast signal with two sidebands, each sideband comprising a respective sideband spectrum,
**characterized by**
an adjustment unit (2, 3) to adjust the bandwidth of the channel selection filter (1) until both sidebands have a predetermined level of similarity, the level of similarity indicating the similarity of the two sideband spectra.

8. Control circuit according to claim 7, **characterized in that** said adjustment unit comprises a fm demodulation unit to determine a distortion level of the received and channel selection filtered broadcast signal, and a setting unit (3) to adjust the bandwidth of the channel selection filter (1) on basis of the distortion level.

9. Control circuit according to claim 7, **characterized in that** said adjustment unit (2,3) comprises a distortion energy analyzer (2) to determine a distortion energy caused by an adjacent channel of the received and channel selection filtered broadcast signal, and a setting unit (3) to adjust the bandwidth of the channel selection filter (1) on basis of the distortion energy and a signal energy of the received broadcast signal.

10. Control circuit according to claim 9, **characterized in that** said distortion energy analyzer (2) comprises first and second short time integrators (2a, 2b) each of which is adapted to determines the energy of one sideband, and a first subtracter (2c) being adapted to determine the distortion energy as a difference of the energies of both sidebands.

11. Control circuit according to claim 9 or 10, **characterized in that** said setting unit (3) comprises means (3e, 3d, 3c) adapted to derive a remaining signal energy as signal energy of the received broadcast signal lying outside the bandwidth of the channel selection filter or a filtered signal energy as signal energy of the received broadcast signal lying within the bandwidth of the channel selection filter, and a second subtracter (3b) adapted to build a further difference between the distortion energy and the remaining signal energy or the filtered signal energy, and an integrator (3a) adapted to output a control signal for setting the bandwidth of the channel selection filter (1) as an integrated value of the further difference.

12. Control circuit according to claim 11, **characterized in that** said integrator (3a) being preset to a maximum bandwidth ($f_{max}$) of the channel selection filter (1).

13. Control circuit according to claim 11 or 12, **characterized in that** said setting unit (3) comprises a multiplier (3d) multiplying the signal energy by the output signal of the integrator (3a) and feeding the resulting product to the second subtracter (3b).

14. Control circuit according to claim 13, **characterized in that** said setting unit (3) comprises a third subtracter (3c) subtracting the output signal of the integrator (3a) from the maximum bandwidth ($f_{max}$) of the channel selection filter (1) and supplying the resulting difference signal to the multiplier (3d).

15. Control circuit according to anyone of the claims 9 to 13, **characterized in that** said setting unit (3) comprises a third short time integrator (3e) to determine the signal energy.

16. Control circuit according to anyone of the claims 11 to 14, **characterized in that** said setting unit (3) comprises a first weighting unit (3f) weighting the further difference between the distortion energy and the remaining signal energy or the filtered signal energy with a first constant to determine a time constant of the control circuit.

17. Control circuit according to anyone of the claims 11 to 15, **characterized in that** said setting unit (3) comprises a second weighting unit (3g) weighting the remaining signal energy or the filtered signal energy with a second constant to determine a trade-off between the distortion energy and the remaining signal energy or the filtered signal energy, respectively.

18. Computer program product, comprising computer program means adapted to perform the method steps as defined in anyone of the claims 1 to 6 and/or to embody the control circuit as defined in anyone of the claims 7 to 17 when executed on a computer, digital signal processor or the like.

**Patentansprüche**

1. Verfahren zum Steuern der Bandbreite eines Kanalwahlfilters (1) eines Rundfunkempfängers, das Folgendes beinhaltet:

   Empfangen und Kanalwahlfiltern eines Rundfunksignals, zum Erhalten eines empfangenen und einer Kanalwahlfilterung unterzogenen Rundfunksignals mit zwei Seitenbändern, von denen jedes über ein jeweiliges Seitenbandspektrum verfügt; **gekennzeichnet durch** Einjustieren der Bandbreite des Kanalwahlfilters (1), bis beide Seitenbänder über einen vorbestimmten Ähnlichkeitsgrad verfügen, der die Ähnlichkeit der zwei Seitenbandspektren anzeigt.

2. Verfahren nach Anspruch 1, **gekennzeichnet durch** Bestimmen der Ähnlichkeit beider Seitenbänder **durch** eine Korrelationsfunktion.

3. Verfahren nach Anspruch 1 oder 2, **gekennzeichnet durch** Bestimmen der Ähnlichkeit beider Seitenbänder **durch** Analysieren einer **durch** einen Nachbarkanal verursachten Störungsenergie und einer Signalenergie des empfangenen Rundfunksignals.

4. Verfahren nach Anspruch 1, **gekennzeichnet durch** Empfangen eines Tiefpass gefilterten AM-Rundfunksignals mit doppeltem Seitenband als empfangenes und einer Kanalwahlfilterung unterzogenen Rundfunksignals; und Bestimmen der Ähnlichkeit beider Seitenbänder **durch** Analysieren eines Ausgangssignals einer Frequenzdemodulation des Tiefpass gefilterten AM-Rundfunksignals mit doppeltem Seitenband.

5. Verfahren nach Anspruch 3, **dadurch gekennzeichnet, dass** die durch einen Nachbarkanal verursachte Störungsenergie als Energiedifferenz der beiden Seitenbandenergien bestimmt wird.

6. Verfahren nach Anspruch 5, **dadurch gekennzeichnet, dass** eine Seitenbandenergie auf Grundlage einer Kurzzeitintegration des Seitenbands bestimmt wird.

7. Steuerschaltung für die Bandbreite eines Kanalwahlfilters (1) eines Rundfunkempfängers, der so ausgebildet ist, dass er ein Rundfunksignal empfängt und einer Kanalwahlfilterung unterzieht, um ein empfangenes und einer Kanalwahlfilterung unterzogenen Rundfunksignals mit zwei Seitenbändern zu erhalten, wobei jedes Seitenband über ein jeweiliges Seitenbandspektrum verfügt; **gekennzeichnet durch**
   eine Einjustiereinheit (2, 3) zum Einjustieren der Bandbreite des Kanalwahlfilters (1) bis beide Seitenbänder über einen vorbestimmten Ähnlichkeitsgrad verfügen, der die Ähnlichkeit der zwei Seitenbandspektren anzeigt.

8. Steuerschaltung nach Anspruch 7, **dadurch gekennzeichnet, dass** die Einjustiereinheit Folgendes aufweist:

   eine FM-Demodulationseinheit zum Bestimmen des Störungspegels des empfangenen und einer Kanalwahlfilterung unterzogenen Rundfunksignals; und
   eine Einstelleinheit (3) zum Einstellen der Bandbreite des Kanalwahlfilters (1) auf Grundlage des Störungspegels.

9. Steuerschaltung nach Anspruch 7, **dadurch gekennzeichnet, dass** die Einjustiereinheit (2, 3) Folgendes aufweist:

   eine Störungsenergie-Analysiereinheit (2) zum Bestimmen einer durch einen Multiplikationskoeffizient verursachten Störungsenergie des empfangenen und einer Kanalwahlfilterung unterzogenen Rundfunksignals; und
   eine Einstelleinheit (3) zum Einjustieren der Bandbreite des Kanalwahlfilters (1) auf Grundlage der Störungsenergie und einer Signalenergie des empfangenen Rundfunksignals.

10. Steuerschaltung nach Anspruch 9, **dadurch gekennzeichnet, dass** die Störungsenergie-Analysiereinheit (2) Folgendes aufweist:

    einen ersten und einen zweiten Kurzzeitintegrierer (2a, 2b), von denen jeder so ausgebildet ist, dass er die Energie eines Seitenbands bestimmt; und
    einen ersten Subtrahierer (2c), der dazu ausgebildet ist, die Störungsenergie als Differenz der Energien beider Seitenbänder zu bestimmen.

11. Steuerschaltung nach Anspruch 9 oder 10, **dadurch gekennzeichnet, dass** die Einstelleinheit (3) Folgendes aufweist:

    eine Einrichtung (3e, 3d, 3c), die dazu ausgebildet, ist eine Restsignalenergie als Signalenergie des empfangenen Rundfunksignals, das außerhalb der Bandbreite des Kanalwahlfilters liegt, oder eine Energie des gefilterten Signals als Signalenergie des empfangenen Rundfunksignals, das innerhalb der Bandbreite des Kanalwahlfilters liegt, herzuleiten;
    einen zweiten Subtrahierer (3b), der dazu ausgebildet ist, eine weitere Differenz zwischen der Störungsenergie und der Restsignalenergie oder der Energie des gefilterten Signals zu bilden; und
    einen Integrierer (3a), der dazu ausgebildet ist, ein Steuerungssignal zum Einstellen der Bandbreite des Kanalwahlfilters (1) als Integrationswert der weiteren Differenz auszugeben.

12. Steuerschaltung nach Anspruch 11, **dadurch gekennzeichnet, dass** der Integrierer (3a) auf die maximale Bandbreite ($f_{max}$) des Kanalwahlfilters (1) voreingestellt ist.

13. Steuerschaltung nach Anspruch 11 oder 12, **dadurch gekennzeichnet, dass** die Einstelleinheit (3) Folgendes aufweist:

    einen Multiplizierer (3d) zum Multiplizieren der Signalenergie des empfangenen Rundfunksignals mit dem Ausgangssignal des Integrierers (3a) und zum Zuführen des sich ergebenden Produkts zum zweiten Subtrahierer (3b).

14. Steuerschaltung nach Anspruch 13, **dadurch gekennzeichnet, dass** die Einstelleinheit (3) Folgendes aufweist:

    einen dritten Subtrahierer (3c) zum Subtrahieren des Ausgangssignals des Integrierers (3a) von der maximalen Bandbreite ($f_{max}$) des Kanalwahlfilters (1) und zum Liefern des sich ergebenden Differenzsignals an den Multiplizierer (3d).

15. Steuerschaltung nach einem der Ansprüche 9 bis 13, **dadurch gekennzeichnet, dass** die Einstelleinheit (3) Folgendes aufweist:

    einen dritten Kurzzeitintegrierer (3e) zum Bestimmen der Signalenergie des empfangenen Rundfunksignals.

16. Steuerschaltung nach einem der Ansprüche 11 bis 14, **dadurch gekennzeichnet, dass** die Einstelleinheit (3) Folgendes aufweist:

eine erste Gewichtungseinheit (3f) zum Gewichten der weiteren Differenz zwischen der Störungsenergie und der Restsignalenergie oder der Energie des gefilterten Signals mit einer ersten Konstante, um eine Zeitkonstante der Steuerschaltung zu bestimmen.

17. Steuerschaltung nach einem der Ansprüche 11 bis 15, **dadurch gekennzeichnet, dass** die Einstelleinheit (3) Folgendes aufweist:

eine zweite Gewichtungseinheit (3g) zum Gewichten der Restsignalenergie oder der Energie des gefilterten Signals mit einer zweiten Konstante zum Bestimmen eines Kompromisses zwischen der Störungsenergie und der Restsignalenergie oder der Energie des gefilterten Signals.

18. Computerprogrammerzeugnis mit einer Computerprogrammmaßnahme, die dazu ausgebildet ist, die Verfahrensschritte, wie sie in einem der Ansprüche 1 bis 6 definiert sind, auszuführen und/oder die Steuerschaltung, wie sie in einem der Ansprüche 7 bis 17 definiert ist, zu realisieren, wenn es auf einem Computer, einem digitalen Signalprozessor oder dergleichen ausgeführt wird.

## Revendications

1. Procédé de contrôle de la largeur de bande d'un filtre de sélection de canal (1) d'un récepteur de diffusion, comprenant les étapes consistant à :

recevoir, et filtrer par sélection de canal, un signal de diffusion, de façon à obtenir un signal de diffusion reçu et filtré par sélection de canal avec deux bandes latérales, chaque bande latérale comprenant un spectre de bande latérale respectif ;
**caractérisé par** l'étape consistant à :

ajuster la largeur de bande du filtre de sélection de canal (1) jusqu'à ce que les deux bandes latérales aient un niveau de similitude prédéterminé, le niveau de similitude indiquant la similarité des spectres des deux bandes latérales.

2. Procédé selon la revendication 1, **caractérisé par** l'étape consistant à déterminer la similarité des deux bandes latérales par une fonction de corrélation.

3. Procédé selon la revendication 1 ou 2, **caractérisé par** l'étape consistant à déterminer la similarité des deux bandes latérales en analysant une énergie de distorsion provoquée par un canal adjacent et une énergie de signal du signal de diffusion reçu.

4. Procédé selon la revendication 1, **caractérisé par** les étapes consistant à :

recevoir un signal de diffusion à modulation d'amplitude (AM) filtré passe-bas, à double bande latérale, en tant que le signal de diffusion reçu et filtré par sélection de canal ; et déterminer la similarité des deux bandes latérales en analysant un signal de sortie d'une démodulation de fréquence du signal de diffusion à modulation d'amplitude filtré passe-bas, à double bande latérale.

5. Procédé selon la revendication 3, **caractérisé en ce que** l'énergie de distorsion provoquée par un canal adjacent est déterminée en tant que la différence d'énergie des énergies des deux bandes latérales.

6. Procédé selon la revendication 5, **caractérisé en ce que** l'énergie d'une bande latérale est déterminée sur la base d'une intégration de très courte durée de ladite bande latérale.

7. Circuit de contrôle de la largeur de bande d'un filtre de sélection de canal (1) d'un récepteur de diffusion, lequel récepteur est adapté pour recevoir, et filtrer par sélection de canal, un signal de diffusion, de façon à obtenir un signal de diffusion reçu et filtré par sélection de canal avec deux bandes latérales, chaque bande latérale comprenant un spectre de bande latérale respectif,
**caractérisé par** :

une unité d'ajustement (2, 3) pour ajuster la largeur de bande du filtre de sélection de canal (1) jusqu'à ce que les deux bandes latérales aient un niveau de similitude prédéterminé, le niveau de similitude indiquant la similarité des spectres des deux bandes latérales.

8. Circuit de contrôle selon la revendication 7, **caractérisé en ce que** ladite unité d'ajustement comprend :

une unité de démodulation fm pour déterminer un niveau de distorsion du signal de diffusion reçu et filtré par sélection de canal ; et une unité de paramétrage (3) pour ajuster la largeur de bande du filtre de sélection de canal (1) sur la base du niveau de distorsion.

9. Circuit de contrôle selon la revendication 7, **caractérisé en ce que** ladite unité de paramétrage (2, 3) comprend :

un analyseur d'énergie de distorsion (2) pour déterminer une énergie de distorsion provoquée par un canal adjacent du signal de diffusion reçu et filtré par sélection de canal ; et
une unité de paramétrage (3) pour ajuster la largeur de bande du filtre de sélection de canal (1) sur la base de l'énergie de distorsion et d'une énergie de signal du signal de diffusion reçu.

**10.** Circuit de contrôle selon la revendication 9, **caractérisé en ce que** ledit analyseur d'énergie de distorsion (2) comprend :

des premier et deuxième intégrateurs de très courte durée (2a, 2b) qui sont adaptés chacun pour déterminer l'énergie d'une bande latérale ; et
un premier soustracteur (2c), qui est adapté pour déterminer l'énergie de distorsion en tant qu'une différence des énergies des deux bandes latérales.

**11.** Circuit de contrôle selon la revendication 9 ou 10, **caractérisé en ce que** ladite unité de paramétrage (3) comprend :

des moyens (3e, 3d, 3c), qui sont adaptés pour faire dériver une énergie de signal restante en tant qu'une énergie de signal du signal de diffusion reçu se situant en dehors de la largeur de bande du filtre de sélection de canal, ou bien une énergie de signal filtré en tant qu'une énergie de signal du signal de diffusion reçu se situant à l'intérieur de la largeur de bande du filtre de sélection de canal ; et
un deuxième soustracteur (3b), qui est adapté pour créer une autre différence entre l'énergie de distorsion et l'énergie de signal restante ou l'énergie de signal filtré ; et
un intégrateur (3a), qui est adapté pour délivrer en sortie un signal de commande pour paramétrer la largeur de bande du filtre de sélection de canal (1) en tant qu'une valeur intégrée de l'autre différence.

**12.** Circuit de contrôle selon la revendication 11, **caractérisé en ce que** ledit intégrateur (3a) est préalablement paramétré à une largeur de bande maximum ($f_{max}$) du filtre de sélection de canal (1).

**13.** Circuit de contrôle selon la revendication 11 ou 12, **caractérisé en ce que** ladite unité de paramétrage (3) comprend :

un multiplicateur (3d), qui multiplie l'énergie de signal du signal de diffusion reçu par le signal de sortie de l'intégrateur (3a), et qui fournit le produit ainsi obtenu, au deuxième soustracteur (3b).

**14.** Circuit de contrôle selon la revendication 13, **caractérisé en ce que** ladite unité de paramétrage (3) comprend :

un troisième soustracteur (3c), qui soustrait le signal de sortie de l'intégrateur (3a) de la largeur de bande maximum ($f_{max}$) du filtre de sélection de canal (1), et qui fournit le signal de différence ainsi obtenu, au multiplicateur (3d).

**15.** Circuit de contrôle selon l'une quelconque des revendications 9 à 13, **caractérisé en ce que** ladite unité de paramétrage (3) comprend :

un troisième intégrateur de très courte durée (3e) pour déterminer l'énergie de signal du signal de diffusion reçu.

**16.** Circuit de contrôle selon l'une quelconque des revendications 11 à 14, **caractérisé en ce que** ladite unité de paramétrage (3) comprend :

une première unité de pondération (3f), qui pondère l'autre différence entre l'énergie de distorsion et l'énergie de signal restante ou l'énergie de signal filtré, avec une première constante, de façon à déterminer une constante de temps du circuit de contrôle.

**17.** Circuit de contrôle selon l'une quelconque des revendications 11 à 15, **caractérisé en ce que** ladite unité de paramétrage (3) comprend :

une deuxième unité de pondération (3g), qui pondère l'énergie de signal restante ou l'énergie de signal filtré, avec une deuxième constante, de façon à déterminer une compensation entre l'énergie de distorsion et l'énergie de signal restante ou l'énergie de signal filtré, respectivement.

**18.** Produit de programme d'ordinateur comprenant des moyens de programme d'ordinateur qui sont adaptés pour exécuter les étapes du procédé défini dans l'une quelconque des revendications 1 à 6, et / ou pour mettre en oeuvre le circuit de contrôle selon l'une quelconque des revendications 7 à 17, quand ils sont exécutés sur un ordinateur, un processeur de signaux numériques, ou similaires.

Figure 1

Figure 2

Figure 3

EP 1 315 303 B1

Figure 4

Figure 5

EP 1 315 303 B1